# EUROPEAN PATENT APPLICATION

(11) **EP 2 019 228 A2**
(43) Date of publication of application: **28.01.2009**
(21) Application number: 08007822.3
(22) Date of filing: 23.04.2008
(51) Int. Cl.: F16F 9/06

(54) **Oil-hydraulic suspension cylinder**

(30) Priority: 27.07.2007 ES 200702105
(71) Applicant: Carcaré Gimeno, Manuel, 08295 Sant Vicenç de Castellet Barcelona (ES)
(72) Inventor: Carcaré Gimeno, Manuel, 08295 Sant Vicenç de Castellet Barcelona (ES)
(74) Representative: Isern-Jara, Nuria

(57) **Abstract**

An oil-hydraulic suspension cylinder, suitable for use in a vehicle, allowing a great variation between the empty weight and the maximum permissible load, with a decrease in that vehicle's height, which is small or inappreciable, which cylinder has a hydraulic cylinder formed of a cylindrical outer sleeve (1) inside which there is a chamber to be filled with oil (6), which comprises a piston (3) that is hollow inside, which can move axially along such outer sleeve with at least one oil-pneumatic accumulator and a second oil-pneumatic accumulator, each of the two oil-pneumatic accumulators being formed of two chambers each, one of them (5, 7a) filled with pressurised gas pre-loaded at a set pressure level, while the other (5b, 7b) is filled with oil, in which the two oil-pneumatic accumulators are housed inside the outer sleeve under operating conditions.

## Description

### OBJECT OF THE INVENTION

The object of this Invention Patent application is the registration of an oil-hydraulic suspension cylinder that has noteworthy innovations and advantages over other cylinders with similar features.

More specifically, the invention refers to an oil-hydraulic suspension cylinder, suitable for use in vehicles, in which there is a great variation between the empty weight and the maximum permissible load, requiring the vehicle's suspension height or displacement to be approximately half of its stroke when operating empty and the rest of the stroke or displacement of the suspension to correspond to the suspension with the vehicle loaded to its maximum permitted level.

### BACKGROUND OF THE INVENTION

The applicant is well aware of the existence of oil-pneumatic or oil-hydraulic devices that use the same operating principle, but have a substantial difference, which is the very reason for this patent application. The current solution is effected with two external accumulators, of the kind available in the market, which are connected to an oil-hydraulic cylinder, also available in the market, by two hoses or pipes for the oil to flow between the accumulators and the cylinder providing the suspension.

This solution implies the need to have greater space or volume to house the device in the vehicle to be assembled. Furthermore, another disadvantage, which is no less important, is the fact that the time and cost of assembling devices that use this solution increases the cost due to having other ancillary connection parts, such as supports to attach the accumulators to the vehicle's structure or chassis, hoses and their relevant connections, as well as the fact of increasing the chances of error during assembly since it can be carried out by non-specialists. This may be due to the vehicle manufacturer sometimes receiving the accumulators and suspension cylinder separately then assembling them individually in the relevant housing. The set of accumulators and cylinder must be filled with oil, during which dirt must be prevented from getting in, and the air must be bled from the system. Since this is carried out on the vehicle manufacturer's premises, the risk of error or lack of sufficient cleanliness is more than evident.

Other examples of operation similar to these kinds of suspension devices are described in patents ES-200.200.201 and ES-200.201.766 belonging to the same applicant.

These suspension devices have an accumulator connected to an oil-hydraulic cylinder with two pistons, thanks to which an appreciably similar operation is achieved. While this solution is entirely effective as it has an accumulator assembled in parallel and next to the suspension cylinder, it takes up space that in certain cases may be disadvantageous during assembly.

None of the devices of the kind described above that the applicant is aware of involves the existence of an invention with the features described herein.

### DESCRIPTION OF THE INVENTION

This invention has been developed in order to provide an oil-hydraulic suspension cylinder that resolves the aforementioned disadvantages, and also has other additional advantages that will be evident from the following description.

Therefore, the object of the invention is to provide an oil-hydraulic suspension cylinder, suitable for use in vehicles, in which there is a great variation between the empty weight and the maximum permissible load, requiring the total suspension height to be lowered, with an absorption stroke that is appreciably the same, both whether the vehicle is travelling empty or moving with a full load, such that the smoothness of the suspension is essentially identical under both loading conditions with a shorter suspension stroke, calculated in accordance with the vehicle manufacturer's requirements.

This cylinder is equipped with a hydraulic cylinder formed of a cylindrical outer sleeve, inside which there is a chamber to be filled with oil, comprising a single piston, which is hollow inside and can move axially along such outer sleeve with at least one oil-pneumatic accumulator; and a second oil-pneumatic accumulator. Each of the oil-pneumatic accumulators are formed of two chambers each, one filled with pressurised gas pre-loaded at a set pressure level, while the other is filled with oil. Both chambers filled with oil are connected to one another through a flow-passage without connection hoses between them, in which the two oil-pneumatic accumulators are appreciably housed inside the outer sleeve under operating conditions, and in which at least one of the oil-pneumatic accumulators has a floating piston that can move axially due to the effect of the pressure exerted during operation.

These features create a more robust suspension device protected from blows, which allows a reduction in the space in which it is housed in the vehicle when it is fitted, and in the number of parts needed to assemble the set, in particular the connection of the two oil-pneumatic accumulators to the suspension cylinder, as set out above, which is also intended to reduce the number of breakdowns possible. Since both oil-pneumatic accumulators are hidden inside, undesired manipulation by third parties that could damage the device as a whole during assembly is also prevented.

The pressurised gas chamber in the two accumulators is preferably isolated from the opposite oil chamber by an elastic membrane made of synthetic rubber or the like, although this rubber membrane can also be replaced with a floating piston with its corresponding sealing joints, which slides along the inside of the pipe with a polished surface.

In a preferred embodiment of the invention, the second oil-pneumatic accumulator is formed inside the outer casing itself. This accumulator is separated from the chamber that can be filled with oil by a transversal separation wall, which contains the flow-passage through which the oil can flow.

In an alternative embodiment of the invention, the two oil-pneumatic accumulators are formed inside the piston that can move axially, which contains flow-passages through which the oil can flow between the two accumulators' chambers and the chamber inside the outer sleeve.

The flow-passages between the different chambers that can be filled with oil are preferably each provided with valves for variable regulation of the oil flow in both directions.

Other features and advantages of the oil-hydraulic suspension cylinder, which is the object of this invention, will be evident from the description of a preferred, but not exclusive, embodiment, which is illustrated by way of example but not limited to the attached drawings:

### BRIEF DESCRIPTION OF THE DRAWINGS

Figure 1 is a cross-section of a first embodiment of an oil-hydraulic suspension cylinder in accordance with this invention;
Figures 2a and 2b show an expanded-detail cross-section of a two-way valve located on each input and output connection orifice for the flow of oil in two operating positions;
Figure 3 is a graph showing the relationship between the weight the device is to bear and the length of the piston's stroke; and
Figure 4 is a cross-section corresponding to a second embodiment of the oil-hydraulic suspension cylinder of the invention.

### DESCRIPTION OF A PREFERRED EMBODIMENT

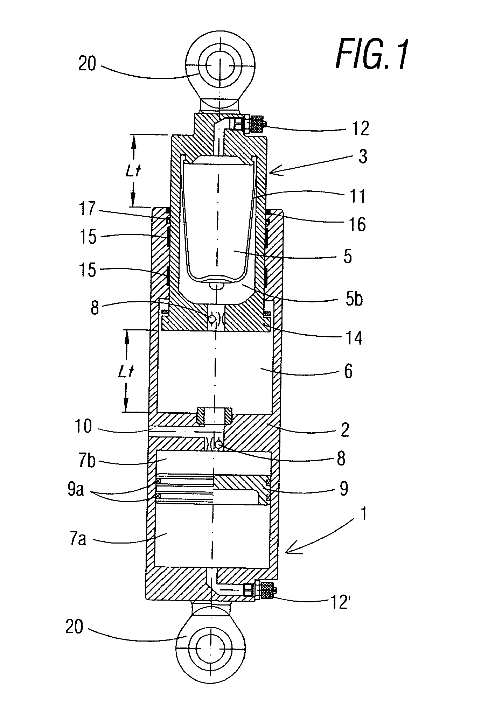

As shown in figure 1, a first embodiment of an oil-hydraulic suspension cylinder, specially designed for use in a vehicle, such as a traction vehicle's trailer, allowing a great variation between the empty weight and the maximum permissible load with a reduced or unappreciable lowering of such vehicle's height with regard to its stroke, has the suspension cylinder that is made up of a sleeve or cylindrical body (1) and a sliding hollow outer piston (3) inside which there are two chambers or volumes that make up one of the two oil-pneumatic accumulators with a rubber membrane (11) separating the two fluids, gas and oil. The sleeve (1) has an oil chamber (6) inside that includes a separating partition (2), with an oil-filling orifice in it (10) and another orifice laid out axially and lengthways with a valve (8) in it, which in turn connects with the volume (7b) that is separated from the gas volume (7a) by means of a floating piston (9) with sealing joints (9a); volume (7a) and (7b) forms the second oil-pneumatic accumulator, which is an integral part of the suspension cylinder's body. Each gas volume in each accumulator is connected with two gas preloading or filling valves (12). As one can see in Fig. 1 the stroke or suspension distance or total absorption distance has been represented by the level mark (Lt).

There are elements between the hydraulic cylinder (1) and piston (3) laid out with a configuration and function that are very well known in the industry, such as guide rings (15), a cleaning scraper (16) and sealing joints (17).

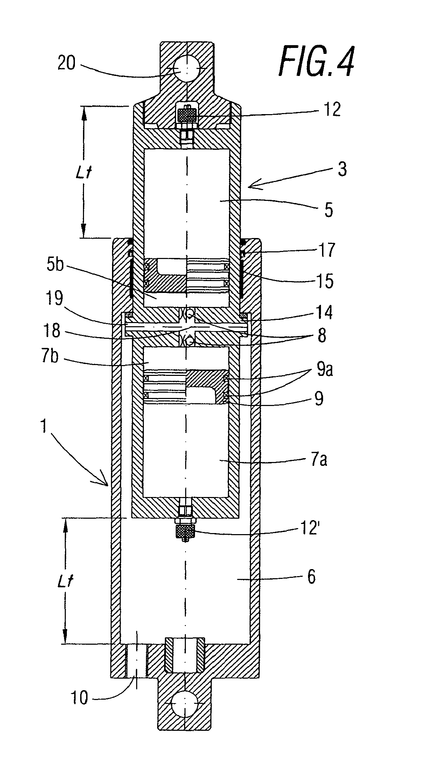

The other solution proposed, which also has the two oil-pneumatic accumulators in it, is shown in figure 4. In this design the piston (3) contains an internal prolongation that forms the second oil-pneumatic accumulator, while the first oil-pneumatic accumulator is the one located inside the top of the piston (3). In this case, the chamber that can be filled with oil (6) surrounds the outside of the accumulator and is connected to the two respective accumulators' oil chambers through the orifice (19) and from this through the orifices (18) and the valves (8). In this solution there is also the oil filling orifice (10) and the holes to anchor and attach the suspension cylinder to the vehicle (20). In this design it is observed that the oil-pneumatic accumulators' gas loading valves are completely isolated from the outside, which provides complete security against any improper manipulation.

In this other alternative embodiment of the other oil-hydraulic suspension cylinder, as one can see in figure 4 in which the same numerical references are used to designate parts or items in common with the embodiment previously described in figure 1, unlike the previous embodiment one of the oil-pneumatic accumulators is located on the piston (3), externally, while the other is inside the suspension cylinder and linked to the previous one; there is a pipe (19) between the two connecting the oil chamber (6) to the respective oil chambers (7b) and (5b) through the two pipes (18) in each of the corresponding non-return valves.

With regard to the embodiment in figure 1, the pressurised gas chamber in one of the accumulators is completely isolated from the opposite oil chamber by an elastic membrane (11) made of synthetic rubber or the like, while in the second oil-pneumatic accumulator, the oil and gas chambers are separated by a floating piston (9) with its corresponding sealing joints (9a), which slides along the inside of the pipe with a polished surface, as can be seen in the second embodiment.

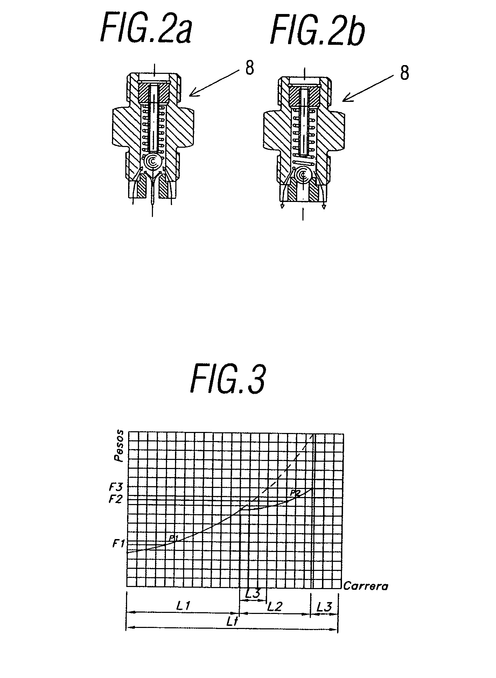

Figures 2a and 2b show the aforementioned valve (8) in a first condition corresponding to the free entry of oil into the accumulator (figure 2a), while the second condition represents a condition with restricted output of oil from the accumulator (figure 2b). These valves (8) with free flow of oil in one direction and restricted flow in the opposite direction have the fundamental usefulness of avoiding the oscillating return effect, reducing the suspension oscillation time when the vehicle goes over an obstacle or pothole.

Figure 3 consists of a graph with unbroken curves showing the relationship between the different loading values F1, F2, F3 and the displacement strokes of the piston L1, L2, and L3, where Lt is the total stoke of the embodiment shown in figure 1 and 4 and:
F1: Empty weight of the vehicle;
F2: Loaded weight of the vehicle;
F3: Inertia overload when the loaded vehicle is moving;
L1: Stroke of the corresponding piston from an empty vehicle to a vehicle loaded close to the maximum level;
L2: Stroke of the corresponding piston from a load close to the maximum level to the maximum level, including inertia force.
L3: Stroke corresponding to the volume of oil put into the low-pressure accumulator at the same time as the high-pressure accumulator stores the volume of oil corresponding to stoke L2;
Lt: Total displacement stroke of the piston coinciding with the maximum volumetric displacement of oil in the chamber (6);
P1: Compression curve for the nitrogen in the low-pressure accumulator;
P2: Compression curve for the nitrogen in the high-pressure accumulator.

As the vehicle is loaded, a point is reached where the two curves intersect, and from that point on the accumulator loaded with higher pressure gas is triggered. Since curve "P2" is flatter in this area than curve "P1", it can be observed that for the same displacement of the piston or variation in oil volume inside the cylinder's chamber (6), the variation in pressure is smaller in the high-pressure accumulator than in the low-pressure one. Therefore, the suspension will be no harder than under driving conditions in which the vehicle is empty.

The broken line is the continuation of the curve (P1) and represents the greater strain required to go through the entire stroke Lt in the absence of the second high preloaded gas accumulator.

The details, shapes, dimensions and other ancillary items, as well as the materials used to manufacture the oil-hydraulic suspension cylinder of the invention may be conveniently replaced with others that are technically equivalent and do not depart from the essence of the invention or the scope defined by the claims set out below.

## Claims

1. An oil-hydraulic suspension cylinder, suitable for use in a vehicle allowing a great variation between the empty weight and the maximum permissible load with a decrease in that vehicle's height, which is small or inappreciable with regard to its stroke, which cylinder has a hydraulic cylinder formed of a cylindrical outer sleeve (1) inside which there is a chamber to be filled with oil (6), **characterised by** the fact that it comprises: a single piston (3) that is hollow inside, which can move axially along such outer sleeve with at least one oil-pneumatic accumulator and; a second oil-pneumatic accumulator, each of the two oil-pneumatic accumulators being formed of two chambers each, one of them (5, 7a) filled with pressurised gas pre-loaded at a set pressure level, while the other (5b, 7b) is filled with oil, in which both chambers filled with oil (5b, 7b) are connected to one another through a flow-passage without connection hoses between them, in which the two oil-pneumatic accumulators are housed inside the outer sleeve under operating conditions, and in which at least one of the oil-pneumatic accumulators has a floating piston that can move axially due to the effect of the pressure exerted during operation.

2. An oil-hydraulic suspension cylinder according to claim 1, **characterised by** the fact that the pressurised gas chamber housed in the piston (3) comprises an elastic membrane (11) that separates the chamber that can be filled with oil (5b) from the pressurised gas chamber (5a) itself.

3. An oil-hydraulic suspension cylinder according to claim 1, **characterised by** the fact that the second oil-pneumatic accumulator is formed inside the outer sleeve (1) itself, such accumulator being divided from the chamber (6) that can be filled with oil by a transversal separation wall (2), which contains the flow-passage through which the oil can flow.

4. An oil-hydraulic suspension cylinder according to claim 1, **characterised by** the fact that the two oil-pneumatic accumulators are formed inside the piston (3) that can move axially, which contains a flow-passage through which the oil can flow between the two accumulators' chambers and the chamber inside the outer sleeve (1).

5. An oil-hydraulic suspension cylinder according to claim 1, **characterised by** the fact that the flow-passages between the different chambers that can be filled with oil (5b, 7b) are provided with two valves (8) for variable regulation of the flow of oil in both directions.
